# DEMANDE DE BREVET EUROPEEN

(11) **EP 1 619 921 A1**
(43) Date de publication de la demande: **25.01.2006**
(21) Numéro de dépôt: 05106760.1
(22) Date de dépôt: 22.07.2005
(51) Int. Cl.: H04Q 7/38, G01S 5/10

(54) **Procédé de localisation d'un terminal mobile dans un réseau mobile non synchronisé.**

(30) Priorité: 22.07.2004 FR 0408137
(71) Demandeur: Bouygues Telecom, 92100 Boulogne Billancourt (FR); DAI TELECOM S.p.A, 34010 Sgonico (TS) (IT); Universitat Politecnica de Catalunya, 08034 Barcelona (ES)
(72) Inventeur: Barceló Arroyo, Francisco, 08034, BARCELONA (ES); Martín Escalona, Israel, 08034, Barcelona (ES); Riba Sagarra, Jaume, 08034, BARCELONA (ES); Urruela Planas, Andreu, 08034, Barcelona (ES); Deperini, Fabio, 33050, Marano Lagunare (UD) (IT); Manente, Cyrille, 91380, Chilly Mazarin (FR); Gibeaux, Monique, 92000, Naterre (FR)
(74) Mandataire: Callon de Lamarck, Jean-Robert

(57) **Abrégé**

L'invention concerne un procédé de localisation d'un terminal mobile (MS) dans un réseau mobile non synchronisé, caractérisé en ce qu'il comprend les étapes consistant à :
- alors que le terminal mobile (MS) est situé dans une zone donnée (2), mesurer des différences de temps de trajet entre des signaux émis par des stations de base (BTS) du réseau et reçus par le terminal mobile (MS),
- déduire une position (x₂, y₂) du terminal mobile (MS) à partir des différences de temps de trajet mesurées dans la zone donnée (2), sur la base de différences de temps de trajet entre des signaux émis par lesdites stations de base (BTS) et précédemment mesurés par le terminal mobile (MS) dans une zone de référence (1) et d'une position correspondante (x₁, y₁) du terminal mobile (MS) déterminée dans ladite zone de référence (1).

## Description

La présente invention concerne un procédé de calcul de localisation de terminaux mobiles fonctionnant dans des réseaux cellulaires.

Par contraste avec la téléphonie fixe, la mobilité des utilisateurs à l'intérieur des systèmes cellulaires implique que les utilisateurs puissent être localisés. Une localisation précise est en particulier nécessaire pour fournir des services de navigation et d'assistance ou des informations à l'utilisateur en fonction de son environnement.

Dans ce but, plusieurs types de systèmes de mesure de position existent actuellement.

Les systèmes de mesure de localisation terrestres, tels que les systèmes EOTD (Enhanced Observed Time Différence) dans les réseaux GSM ou les systèmes OTDOA (Observed Time Différence Of Arrival) dans les réseaux UMTS, sont basés sur des calculs de triangulation qui prennent en compte les temps de trajet des signaux émis par plusieurs stations de base (BTS). Dans de tels systèmes, le terminal mobile mesure les différences de temps de trajet observées entre les signaux émis par au moins trois stations de base avoisinantes.

Cependant, les différences de temps observées mesurées par le terminal mobile diffèrent des différences de temps de trajet réelles entre les signaux, en raison du retard d'émission entre deux stations de base. Ce retard est appelé la différence de temps relative (RTD).

Afin de mesurer les différences de temps réelles entre les signaux, une solution consiste à synchroniser les émissions des station de base selon une référence commune donnée par un système externe (par exemple par un système GPS) pour que les différences de temps observées représentent toujours les différences de temps de trajet réelles. Une autre solution consiste à mesurer régulièrement la RTD entre les stations de base au moyen d'unités de mesure de localisation LMU (Location Measurement Unit) positionnées à des emplacements prédéterminés dans le réseau. La LMU transmet des informations de RTD au terminal mobile pour que le terminal mobile puisse déterminer les différences de temps de trajet réelles à partir des différences de temps observées.

Les systèmes de mesure de position par satellite, tels que le système mondial de positionnement assisté (A-GPS), fournissent des mesures précises (à plus ou moins 5 mètres) des terminaux mobiles. Cependant, de tels systèmes de mesures ne sont pas toujours disponibles. Ceci est le cas, par exemple, dans des environnements où les satellites GPS ne sont pas visibles.

Le problème résolu par l'invention est de fournir un procédé de calcul de localisation d'un terminal mobile dans un réseau non synchronisé, fonctionnant même dans des zones où des systèmes de mesure précise de position ne sont pas disponibles.

Ce problème est résolu par un procédé de localisation d'un terminal mobile dans un réseau mobile non synchronisé, caractérisée en ce qu'il comprend les étapes consistant à :
- alors que le terminal mobile est situé dans une zone donnée, mesurer des différences de temps de trajet entre des signaux émis par les stations de base du réseau et reçus par le terminal mobile,
- déduire une position du terminal mobile à partir des différences de temps de trajet mesurées dans la zone donnée, sur la base de différences de temps de trajet entre des signaux émis par lesdites stations de base et précédemment mesurées par le terminal mobile dans une zone de référence et d'une position correspondante du terminal mobile déterminée dans ladite zone de référence.

La zone de référence est une zone où la position du terminal mobile peut être connue à partir d'un système classique de mesure de localisation.

Le procédé selon l'invention permet de calculer la position ou les coordonnées du terminal mobile dans une zone donnée où seuls les signaux émis depuis des stations de base du réseau sont disponibles.

Le procédé est basé sur des mesures précédentes effectuées dans une zone de référence où les données fournies par les unités de mesure de localisation (LMU) comprises dans le réseau ou d'autres systèmes de positionnement externes au réseau sont disponibles, de sorte que la position du terminal mobile soit précisément connue.

Un tel procédé réduit le besoin de fournir une distribution dense des équipements de mesure de localisation terrestres et en particulier des unités de mesures de localisation (LMU).

Un tel procédé réduit également le besoin de recourir à des systèmes de positionnement externes au réseau, tels que les systèmes GPS.

L'invention concerne également un terminal mobile caractérisé en ce qu'il comprend :
- des moyens pour mesurer les différences de temps de trajet entre les signaux émis par les stations de base d'un réseau non synchronisé, alors que le terminal mobile est située dans une zone donnée,
- des moyens de traitement adaptés pour déduire une position du terminal mobile à partir des différences de temps de trajet mesurées dans la zone donnée, sur la base des différences de temps de trajet entre les signaux émis par lesdites stations de base et précédemment mesurés par le terminal mobile dans une zone de référence et d'une position correspondante du terminal mobile déterminée dans ladite zone de référence.

De façon avantageuse, le terminal mobile comprend des moyens de stockage pour enregistrer les différences de temps de trajet entre les signaux émis par les stations de base du réseau et reçus par le terminal mobile dans la zone de référence et enregistrer une position correspondante du terminal mobile.

Lorsque le terminal mobile est situé en une position connue, il effectue des mesures qui seront utiles pour un calcul de localisation ultérieur.

D'autres caractéristiques et avantages de l'invention ressortiront plus clairement à la lecture de la description ci-après, faite en référence aux dessins annexés.
- Les figures 1A et 1B illustrent de façon schématique un premier mode de réalisation de l'invention, dans lequel le réseau mobile comprend une unité de mesure de localisation.
- Les figures 2A et 2B illustrent de façon schématique un second mode de réalisation de l'invention, dans lequel le terminal mobile comprend les moyens de positionnement A-GPS.

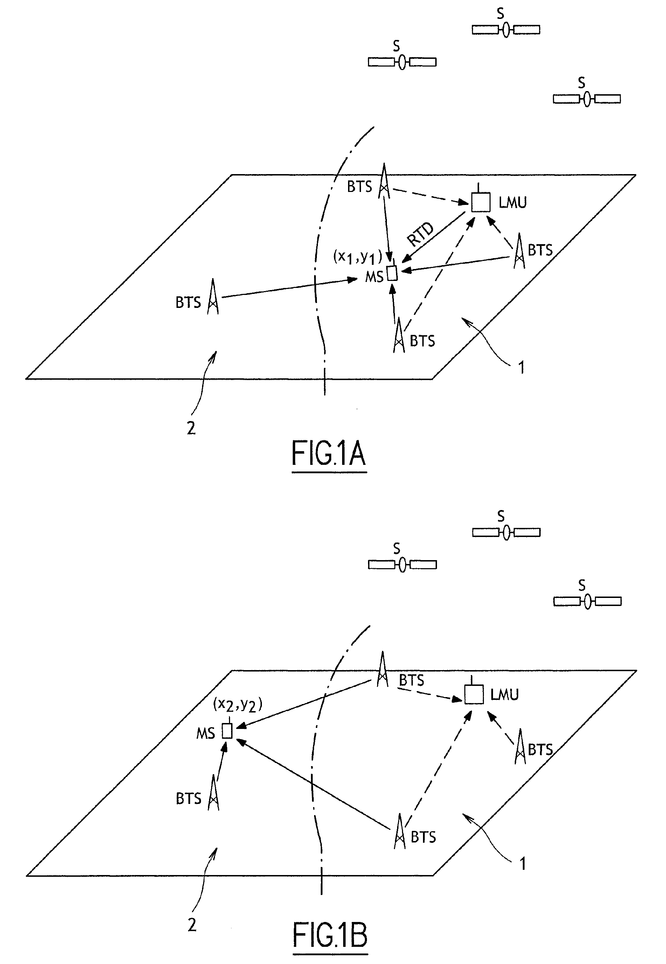

Les figures 1A et 1B représentent un réseau mobile comprenant une pluralité de stations de base BTS. Le réseau mobile comprend également un système de mesure de localisation comprenant les unités de mesure de localisation LMU. L'une des LMU est située dans une position connue dans une première zone 1 et reçoit des signaux transmis par les stations BTS avoisinantes (flèches en pointillés). La LMU est adaptée pour mesurer de façon régulière la différence de temps relative RTD entre les stations de base BTS et pour diffuser des informations de RTD pour une utilisation par un terminal mobile quelconque située dans la première zone 1.

Sur la figure 1A, un terminal mobile MS est situé dans la première zone 1 couverte par la LMU. La zone 1 constitue une zone de référence car le terminal mobile est capable de déterminer sa position ou ses coordonnées (x₁, y₁) à partir des données fournies par le système de mesure de localisation réseau.

Dans ce but, le terminal mobile MS comprend des moyens pour recevoir des signaux émis par une pluralité de BTS du réseau (flèches continues) et des moyens pour mesurer les différences de temps de trajet observées (OTD) entre ces signaux. Le terminal mobile MS comprend également des moyens pour recevoir des informations de RTD transmises par la LMU située dans la première zone 1.

Le terminal mobile MS comprend des moyens de traitement adaptés pour calculer les différences de temps de trajet réelles entre les signaux émis par les stations de base BTS sur la base des différences de temps de trajet observées et des informations de RTD fournies par la LMU. Les moyens de traitement sont adaptés pour déduire à partir des différences de temps de trajet réelles les coordonnées (x₁, y₁) du terminal mobile MS dans la première zone 1 par une méthode de triangulation.

Le terminal mobile MS comprend des moyens de stockage pour enregistrer les différences de temps de trajet entre des signaux émis par les stations de base BTS du réseau et enregistrer les coordonnées correspondantes (x₁, y₁).

Sur la figure 1 B, à une période ultérieure, le terminal mobile MS est maintenant située dans une seconde zone 2 non couverte par une LMU. Dans cette seconde zone 2, le terminal mobile MS n'est pas capable de recevoir des données fournies par le système de mesure de localisation du réseau.

Afin de déterminer la position du terminal, les moyens de traitement du terminal mobile MS sont adaptés pour mesurer les différences de temps de trajet entre les signaux émis par des BTS avoisinantes du réseau (flèches continues) et pour déduire la position du terminal mobile à partir des différences de temps de trajet observées. Les moyens de traitement déduisent les coordonnées (x₂, y₂) du terminal mobile MS dans la zone 2 sur la base des mesures précédemment enregistrées dans les moyens de stockage. Les moyens de traitement calculent les coordonnées (x₂, y₂) sur la base des différences de temps de trajet précédemment mesurées par le terminal mobile MS pour les mêmes stations de base BTS dans la zone de référence 1 et des coordonnées correspondantes (x₁, y₁) du terminal mobile MS précédemment déterminées dans ladite zone de référence 1. En réalité, le terminal mobile MS fonctionne comme une LMU.

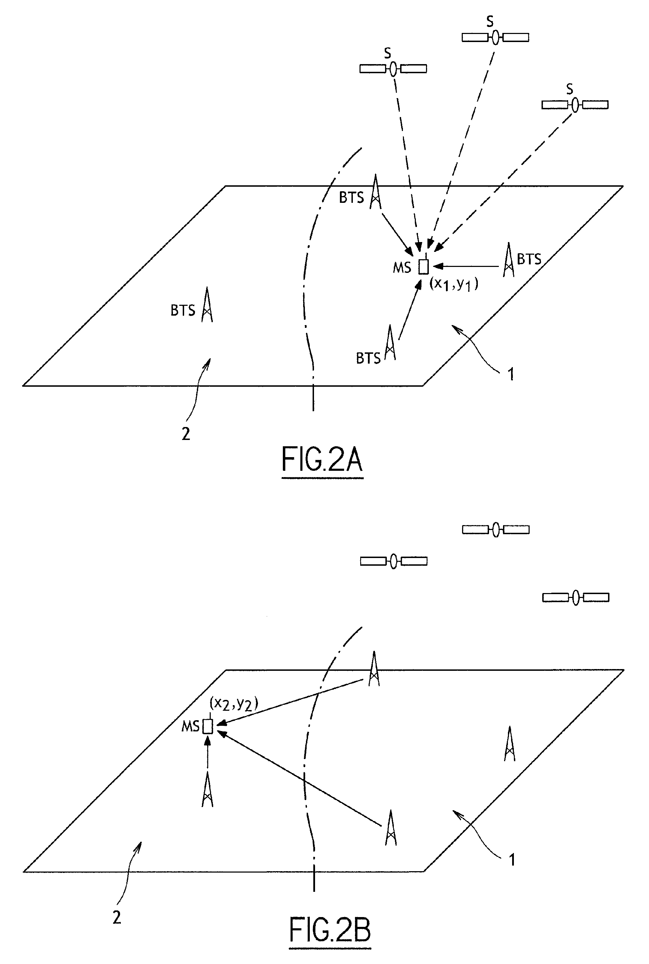

Les figures 2A et 2B illustrent un autre mode de réalisation de l'invention, dans lequel la première zone 1 est couverte par un système de mesure de localisation externe au réseau. Ce système externe comprend une pluralité de satellites géostationnaires S visibles par un terminal mobile lorsque le terminal mobile MS est situé dans la première zone 1.

Sur la figure 2A, un terminal mobile MS est situé dans la première zone 1 couverte par les satellites S. La zone 1 constitue une zone de référence parce que le terminal mobile MS est capable de déterminer ses coordonnées (x₁, y₁) à partir des données fournies par le système de mesure de localisation satellite.

Dans ce but, le terminal mobile MS comprend des moyens pour recevoir des signaux émis par une pluralité de BTS du réseau (flèches continues) et des moyens pour mesurer les différences de temps de trajet observées (OTD) entre ces signaux. Le terminal mobile MS comprend également des moyens pour recevoir des signaux GPS transmis par les satellites S et des moyens pour mesurer les différences de temps de trajet entre les signaux GPS.

Le terminal mobile MS comprend les moyens de traitement adaptés pour calculer à partir des différences de temps de trajet entre les signaux GPS, les coordonnées (x₁, y₁) du terminal mobile dans la première zone 1 par une méthode de triangulation.

Le terminal mobile MS comprend des moyens de stockage pour enregistrer les différences de temps de trajet observées entre les signaux émis par les stations de base du réseau et enregistrer la position correspondante déterminée à partir des signaux GPS.

Sur la figure 2B, à un instant ultérieur, le terminal mobile MS est maintenant situé dans une seconde zone 2 où les satellites S ne sont pas visibles. Dans cette seconde zone 2, le terminal mobile MS n'est pas capable de recevoir des données fournies par le système de mesure de localisation satellite. Il existe un grand nombre d'environnements où les satellites S ne sont pas visibles, tels que l'intérieur de bâtiments ou des rues étroites délimitées entre les bâtiments élevés.

Afin de déterminer la position du terminal, les moyens de traitement du terminal mobile MS sont adaptés pour mesurer les différences de temps de trajet entre les signaux émis par les BTS avoisinantes du réseau (flèches continues) et pour déduire la position du terminal mobile à partir des différences de temps de trajet mesurées. Les moyens de traitement déduisent la position du terminal mobile dans la zone 2 sur la base de mesures précédemment enregistrées dans les moyens de stockage. Les moyens de traitement calculent les coordonnées (x₂, y₂) sur la base des différences de temps de trajet précédemment mesurées par le terminal mobile MS pour les mêmes stations de base BTS dans la zone de référence 1 et la position correspondante (x₁, y₁) du terminal mobile précédemment déterminée dans ladite zone de référence 1.

L'invention peut être appliquée de façon avantageuse là où la couverture des satellites GPS n'est pas suffisante. L'invention peut être également appliquée afin d'éviter de recourir aux systèmes de mesure GPS de manière à réaliser des économies d'échelle.

Pour que le procédé de localisation du terminal mobile fonctionne dans de bonnes conditions, la deuxième zone 2 doit être proche de la première zone 1 (zone de référence), typiquement les zones 1 et 2 doivent être couvertes par au moins trois stations de bases BTS communes. De plus, le laps de temps passé entre les mesures précédentes dans la zone de référence 1 et les nouvelles mesures dans la seconde zone 2 doit être suffisamment court afin d'éviter des dérives trop importantes des stations de base qui pourraient altérer la précision des mesures faite par le terminal mobile.

Dans une variante des modes de réalisation sus-décrits, le terminal mobile MS lorsqu'elle est située dans une première zone 1 est adaptée pour fournir au réseau des données comprenant les différences de temps de trajet mesurées dans la zone de référence 1 et la position correspondante (x₁, y₁) du terminal mobile MS, pour que le réseau puisse diffuser ces données à d'autres terminaux mobiles, pour une utilisation en tant qu'informations d'assistance de localisation.

Dans une autre variante de l'invention, le terminal mobile est adapté pour utiliser une pluralité de sources temporelles à partir de plusieurs systèmes de mesure de localisation. Le terminal mobile est par exemple capable d'appliquer une méthode de triangulation sur les données fournies pour une partie par les satellites GPS et pour une autre partie par les stations de base BTS du réseau. Dans un tel cas, le terminal mobile MS, dans la première position (x₁, y₁) mesure les différences de temps entre les stations de base et également une différence de synchronisation entre le système de satellite GPS et le système de station de base. Si, dans la seconde position (x₂, y₂) du terminal mobile MS, uniquement deux stations de base et deux satellites GPS sont visibles, le terminal mobile MS peut déduire sa position à partir des signaux émis par les stations de base BTS et les satellites GPS, en prenant en compte la différence de synchronisation entre les système de satellite GPS et le système de station de base.

## Revendications

1. Procédé de localisation d'un terminal mobile (MS) dans un réseau mobile non synchronisé, **caractérisé en ce qu'**il comprend les étapes consistant à :
- alors que le terminal mobile (MS) est situé dans une zone donnée (2), mesurer les différences de temps de trajet entre des signaux émis par des stations de base (BTS) du réseau et reçus par le terminal mobile (MS),
- déduire une position (x₂, y₂) du terminal mobile (MS) à partir des différences de temps de trajet mesurées dans la zone donnée (2), sur la base de différences de temps de trajet entre des signaux émis par lesdites stations de base (BTS) et précédemment mesurées par le terminal mobile (MS) dans une zone de référence (1) et d'une position correspondante (x₁, y₁) du terminal mobile (MS) déterminée dans ladite zone de référence (1).

2. Procédé selon la revendication 1, comprenant les étapes préliminaires consistant à :
- alors que le terminal mobile (MS) est situé dans la zone de référence (1), mesurer les différences de temps de trajet entre les signaux émis par les stations de base (BTS) du réseau et reçus par le terminal mobile (MS),
- déterminer la position correspondante (x₁, y₁) du terminal mobile (MS) dans ladite zone de référence (1).

3. Méthode selon la revendication 2, dans laquelle l'étape de détermination de la position du terminal mobile (MS) dans la zone de référence (1) comprend la réception de données de localisation fournies par un système de mesure de localisation (S) externe au réseau et la déduction de la position correspondante (x₁, y₁) du terminal mobile (MS).

4. Procédé selon la revendication 3, dans lequel les données de localisation sont des signaux fournis par les satellites GPS (S).

5. Procédé selon la revendication 2, dans lequel l'étape de détermination de la position (x₁, y₁) du terminal mobile (MS) dans la zone de référence (1) comprend les étapes consistant à :
- calculer des différences réelles de temps de trajet entre les signaux émis par des stations de base (BTS) sur la base des différences de temps de trajet mesurées par le terminal mobile (MS) située dans ladite zone de référence (1) et d'une différence de temps relative (RTD) fournie par une unité de mesure de localisation (LMU) du réseau,
- déduire à partir des différences de temps de trajet réelles, la position (x₁, y₁) du terminal mobile (MS) par une méthode de triangulation.

6. Procédé selon l'une quelconque des revendications 1 à 5, comprenant l'étape consistant à :
- alors que le terminal mobile (MS) est dans la zone de référence (1), enregistrer dans des moyens de stockage du terminal mobile (MS), les différences de temps de trajet entre des signaux émis par les stations de base (BTS) du réseau et reçus par le terminal mobile (MS), et enregistrer une position correspondante (x₁, y₁) du terminal mobile (MS).

7. Procédé selon l'une quelconque des revendications 1 à 6, comprenant l'étape consistant à :
- fournir au réseau des données comprenant des différences de temps de trajet mesurées par le terminal mobile (MS) dans la zone de référence (1) et la position correspondante (x₁, y₁) du terminal mobile (MS), pour que le réseau puisse diffuser ces données vers d'autres terminaux mobiles.

8. Terminal mobile **caractérisé en ce qu'**il comprend :
- des moyens destinés à mesurer des différences de temps de trajet entre les signaux émis par les stations de base (BTS) d'un réseau non synchronisé, alors que le terminal mobile (MS) est situé dans une zone donnée (2),
- des moyens de traitement adaptés pour déduire une position (x₂, y₂) du terminal mobile (MS) à partir des différences de temps de trajet mesurées dans la zone donnée (2), sur la base des différences de temps de trajet entre les signaux émis par lesdites stations de base (BTS) et précédemment mesurés par le terminal mobile (MS) dans une zone de référence (1) et d'une position correspondante (x₁, y₁) du terminal mobile (MS) déterminée dans ladite zone de référence (1).

9. Terminal mobile selon la revendication 8, comprenant des moyens de stockage pour enregistrer les différences de temps de trajet entre les signaux émis par les stations de base (BTS) du réseau et reçus par le terminal mobile (MS) dans la zone de référence (1) et enregistrer une position correspondante (x₁, y₁) du terminal mobile (MS).

10. Terminal mobile selon l'une quelconque des revendications 8 ou 9, dans lequel les moyens de traitement sont adaptés pour :
- alors que le terminal mobile (MS) est situé dans la zone de référence (1), mesurer les différences de temps de trajet entre les signaux émis par les stations de base (BTS) du réseau et reçus par le terminal mobile (MS),
- déterminer la position correspondante (x₁, y₁) du terminal mobile (MS) dans ladite zone de référence (1).

11. Terminal mobile selon la revendication 10, dans lequel les moyens de traitement sont adaptés pour recevoir des données de localisation fournies par un système de mesure de localisation (S) externe au réseau et déduire la position correspondante (x₁, y₁) du terminal mobile (MS).

12. Terminal mobile selon la revendication 11, dans lequel les données de localisation sont des signaux fournis par les satellites GPS (S).

13. Terminal mobile selon l'une quelconque des revendications 8 ou 9, dans lequel les moyens de traitement sont adaptés pour :
- calculer les différences réelles de temps de trajet entre les signaux émis des stations de base (BTS) sur la base des différences de temps de trajet mesurées par le terminal mobile (MS) situé dans ladite zone de référence (1) et d'une différence de temps relative (RTD) fournie par une unité de mesure de localisation (LMU) du réseau,
- déduire à partir des différences réelles de temps de trajet, la position (x₁, y₁) du terminal mobile (MS) par une méthode de triangulation.

14. Terminal mobile selon l'une quelconque des revendications 8 à 13, adapté pour fournir au réseau des données comprenant des différences de temps de trajet mesurées par le terminal mobile (MS) dans la zone de référence (1) et la position correspondante (x₁, y₁) du terminal mobile (MS), pour que le réseau puisse diffuser ces données vers d'autres terminaux mobiles.
